# EUROPEAN PATENT APPLICATION

(11) **EP 3 051 859 A1**
(43) Date of publication of application: **03.08.2016**
(21) Application number: 14846984.4
(22) Date of filing: 22.09.2014
(51) Int. Cl.: H04W 16/32, H04W 72/04

(54) **BASE STATION AND USER TERMINAL**

(30) Priority: 26.09.2013 JP 2013199878
(71) Applicant: Kyocera Corporation, Kyoto-shi, Kyoto 612-8501 (JP)
(72) Inventor: FUJISHIRO, Masato, Kyoto-shi Kyoto 612-8501 (JP)
(74) Representative: Schwabe - Sandmair - Marx
(86) International application number: PCT/JP2014/075064
(87) International publication number: WO 2015/046138

(57) **Abstract**

A eNB manages a cell in a mobile communication system of performing communication by using a frame configuration having a plurality of downlink subframes. The eNB transmits a CRS in reference signal subframes which are some downlink subframes out of the plurality of downlink subframes. A cell identifier including a subframe number-related part related with a subframe number of the reference signal subframes is assigned to the cell,

## Description

### TECHNICAL FIELD

The present invention relates to a base station and a user terminal used in a mobile communication system.

### BACKGROUND ART

In LTE (Long Term Evolution), specifications of which have been designed in 3GPP (3rd Generation Partnership Project) which is a project aiming to standardize a mobile communication system, a cell identifier for identifying a cell is assigned to each cell.

The cell identifier includes a physical cell identifier (PCI: Physical Cell ID), a cell global identifier (ECGI: E-UTRAN Cell Global ID), and the like (for example, see Non Patent Literature 1).

Further, in the 3GPP, introduction of a new carrier structure (NCT: New Carrier Type) has been discussed, that is different from a conventional-type carrier structure defined in the Releases 8 to 11.

### CITATION LIST

### NON PATENT LITERATURE

[NPL 1] 3GPP Technical Specification "TS 36.300 V11.6.0" July, 2013

### SUMMARY OF INVENTION

The number of cell identifiers available in a mobile communication system is limited. For example, 504 physical cell identifiers are defined in LTE specifications.

Therefore, a communication environment in which a number of small cells are provided in a macro cell has a problem that a cell identifier depletes, making it difficult to assign the cell identifier without overlap.

Accordingly, an object of the present invention is to realize an improved cell identifier.

A base station according to a first aspect manages a cell in a mobile communication system of performing communication by using a frame configuration having a plurality of downlink subframes. The base station comprises a transmitter configured to transmit a cell-specific reference signal in reference signal subframes which are some downlink subframes out of the plurality of downlink subframes. A cell identifier including a subframe number-related part related with a subframe number of the reference signal subframes is assigned to the cell.

A user terminal according to a second aspect is used in a mobile communication system of performing communication by using a frame configuration having a plurality of downlink subframes, The user terminal comprises a receiver configured to receive, from a cell, a cell-specific reference signal in reference signal subframes which are some downlink subframes, out of the plurality of downlink subframes. A cell identifier including a subframe number-related part related with a subframe number of the reference signal subframes is assigned to the cell.

### BRIEF DESCRIPTION OF DRAWINGS

Fig. 1 is a configuration diagram of an LTE system according to a first embodiment and a second embodiment.
Fig. 2 is a block diagram of a UE according to the first embodiment and the second embodiment.
Fig. 3 is a block diagram of an eNB according to the first embodiment and the second embodiment.
Fig. 4 is a protocol stack diagram of a radio interface according to the first embodiment and the second embodiment.
Fig. 5 is a configuration diagram of a radio frame according to the first embodiment and the second embodiment.
Fig. 6 is a diagram for explaining an NCT according to the first embodiment.
Fig. 7 is a diagram for explaining an operation environment according to the first embodiment and the second embodiment.
Fig. 8 is a diagram for explaining a relation between a cell group and a reference signal subframe according to the first embodiment.
Fig. 9 is a diagram for explaining an NRT according to the first embodiment.
Fig. 10 is a diagram for explaining an operation according to the second embodiment.
Fig. 11 is a sequence diagram showing an operation pattern 2 according to the second embodiment.

### DESCRIPTION OF EMBODIMENTS

### [Overview of embodiments]

A base station according to embodiments manages a cell in a mobile communication system of performing communication by using a frame configuration having a plurality of downlink subframes. The base station comprises a transmitter configured to transmit a cell-specific reference signal in reference signal subframes which are some downlink subframes out of the plurality of downlink subframes. A cell identifier including a subframe number-related part related with a subframe number of the reference signal subframes is assigned to the cell.

In the embodiments, the cell identifier is obtained by extending a physical cell identifier of the cell. The subframe number-related part is an extended part to be added to the physical cell identifier.

In the embodiments, the subframe number-related part is a group identifier for identifying a group comprising a plurality of cells including the cell.

In the embodiments, the base station further comprises a controller configured to set the reference signal subframe, out of the plurality of downlink subframes depending on the subframe number-related part included in the cell identifier assigned to the cell.

In the embodiments, the controller performs a negotiation with a neighboring cell before starting an operation of the cell. Tthe controller sets at least one of a resource element and a subframe in which a cell-specific reference signal of the cell is provided on the basis of a result of the negotiation.

In the embodiments, the cell is a small cell capable of being arranged in a coverage of a macro cell.

In the embodiments, the cell is a secondary cell that is operated in a pair with a primary cell.

A user terminal according to the embodiments is used in a mobile communication system of performing communication by using a frame configuration having a plurality of downlink subframes. The user terminal comprises a receiver configured to receive, from a cell, a cell-specific reference signal in reference signal subframes which are some downlink subframes, out of the plurality of downlink subframes. A cell identifier including a subframe number-related part related with a subframe number of the reference signal subframes is assigned to the cell.

In the embodiments, the user terminal further comprises a controller configured to specify the reference signal subframe on the basis of the subframe number-related part included in the cell identifier.

In the embodiments, the cell identifier is obtained by extending a physical cell identifier of the cell. The subframe number-related part is an extended part to be added to the physical cell identifier.

In the embodiments, the subframe number-related part is a group identifier for identifying a group comprising a plurality of cells including the cell.

### [First Embodiment]

An embodiment of applying the present invention to the LTE system will be described below.

### (System Configuration)

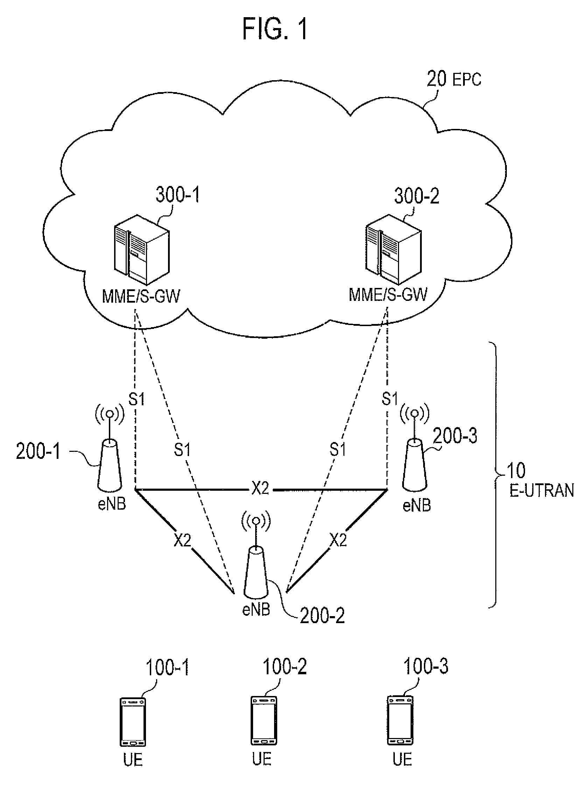

Fig. 1 is a configuration diagram of an LTE system according to first embodiment. As illustrated in Fig. 1, the LTE system according to first embodiment includes a plurality of UEs (User Equipments) 100, E-UTRAN (Evolved-UMTS Terrestrial Radio Access Network) 10, and EPC (Evolved Packet Core) 20.

The UE 100 corresponds to a user terminal. The UE 100 is a mobile communication device and performs radio communication with a cell (a serving cell) with which a connection is established. Configuration of the UE 100 will be described later.

The E-UTRAN 10 corresponds to a radio access network. The E-UTRAN 10 includes a plurality of eNBs (evolved Node-Bs) 200. The eNB 200 corresponds to a base station. The eNBs200 are connected mutually via an X2 interface. Configuration of the eNB200 will be described later.

The eNB 200 manages one or a plurality of cells and performs radio communication with the UE 100 which establishes a connection with the cell of the eNB 200. The eNB 200 has a radio resource management (RRM) function, a routing function for user data, and a measurement control function for mobility control and scheduling, and the like. It is noted that the "cell" is used as a term indicating a minimum unit of a radio communication area, and is also used as a term indicating a function of performing radio communication with the UE 100.

The EPC 20 corresponds to a core network. A network of the LTE system is configured by the E-UTRAN 10 and the EPC 200. The EPC 20 includes a plurality of MME (Mobility Management Entity)/S-GWs (Serving-Gateways) 300. The MME performs various mobility controls and the like for the UE 100. The S-GW performs control to transfer user. MME/S-GW 300 is connected to eNB 200 via an S1 interface.

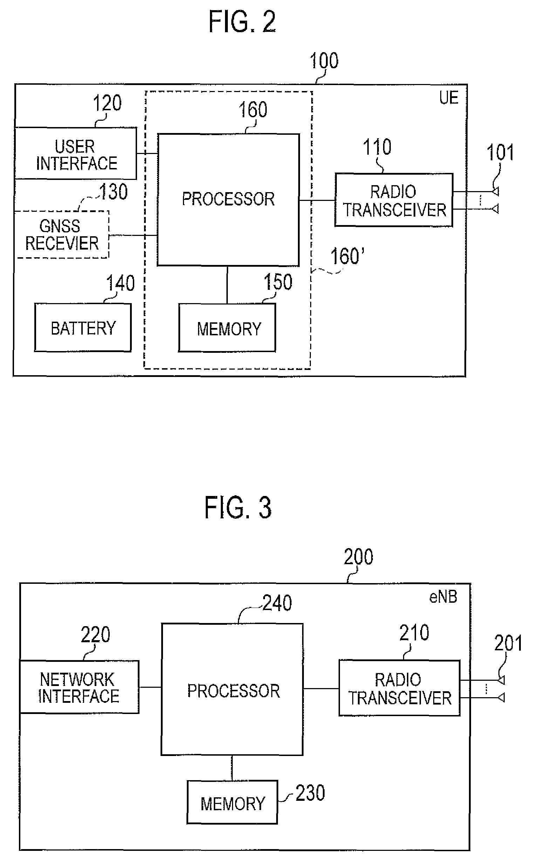

Fig. 2 is a block diagram of the UE 100. As illustrated in Fig. 2, the UE 100 includes plural antennas 101, a radio transceiver 110, a user interface 120, a GNSS (Global Navigation Satellite System) receiver 130, a battery 140, a memory 150, and a processor 160. The memory 150 corresponds to memory unit. The processor 160 (and the memory 150) constitute a controller. The UE 100 may not have the GNSS receiver 130. Furthermore, the memory 150 may be integrally formed with the processor 160, and this set (that is, a chip set) may be called a processor 160'.

The plural antennas 101 and the radio transceiver 110 are used to transmit and receive a radio signal. The radio transceiver 110 converts a baseband signal (a transmission signal) output from the processor 160 into the radio signal and transmits the radio signal from the antenna 101. Furthermore, the radio transceiver 110 converts a radio signal received by the antenna 101 into a baseband signal (a received signal), and outputs the baseband signal to the processor 160.

The user interface 120 is an interface with a user carrying the UE 100, and includes, for example, a display, a microphone, a speaker, various buttons and the like. The user interface 120 accepts an operation from a user and outputs a signal indicating the content of the operation to the processor 160. The GNSS receiver 130 receives a GNSS signal in order to obtain location information (longitude and latitude, etc.) indicating a geographical location of the UE 100, and outputs the received signal to the processor 160. The battery 140 accumulates power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and CPU (Central Processing Unit) that performs various processes by executing the program stored in the memory 150. The processor 160 may further include a codec that performs encoding and decoding on sound and video signals. The processor 160 executes various processes and various communication protocols described later.

Fig. 3 is a block diagram of the eNB 200. As illustrated in Fig. 3, the eNB 200 includes plural antennas 201, a radio transceiver 210, a network interface 220, a memory 230, and a processor 240. The memory 230 corresponds to memory unit. The processor 240 (and the memory 230) constitute a controller.

The plural antennas 201 and the radio transceiver 210 are used to transmit and receive a radio signal. The radio transceiver 210 converts a baseband signal (a transmission signal) output from the processor 240 into the radio signal and transmits the radio signal from the antenna 201. Furthermore, the radio transceiver 210 converts a radio signal received by the antenna 201 into a baseband signal (a received signal), and outputs the baseband signal to the processor 240.

The network interface 220 is connected to the neighboring eNB 200 via the X2 interface and is connected to the MME/S-GW 300 via the S1 interface. The network interface 220 is used in communication over the X2 interface and communication over the S1 interface.

The memory 230 stores a program to be executed by the processor 240 and information to be used for a process by the processor 240. The processor 240 includes a baseband processor that performs modulation and demodulation, encoding and decoding and the like on the baseband signal and CPU that performs various processes by executing the program stored in the memory 230. The processor 240 executes various processes and various communication protocols described later.

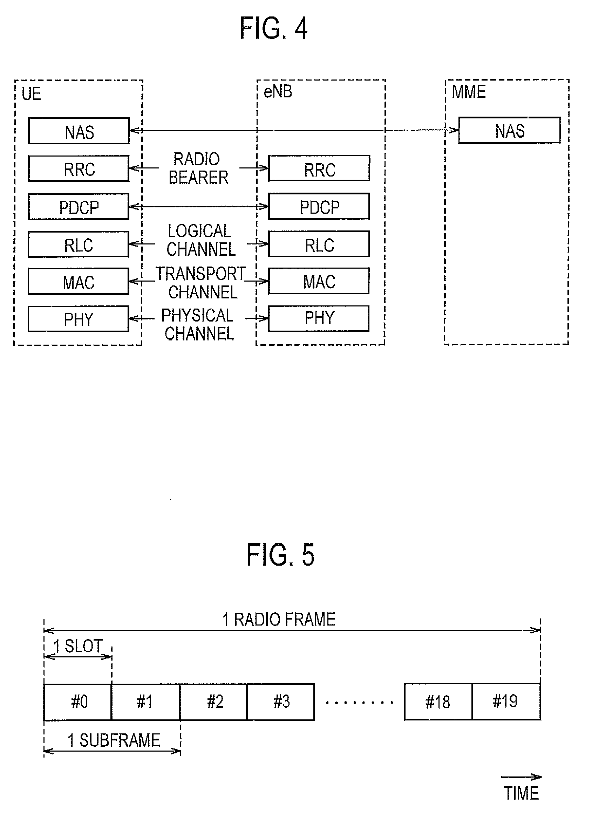

Fig. 4 is a protocol stack diagram of a radio interface in the LTE system. As illustrated in Fig. 4, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, use data and control signal are transmitted via the physical channel.

The MAC layer performs priority control of data, a retransmission process by hybrid ARQ (HARQ), and the like. Between the MAC layer of the UE 100 and the MAC layer of the eNB 200, user data and control signal are transmitted via a transport channel. The MAC layer of the eNB 200 includes a scheduler that determines a transport format of an uplink and a downlink (a transport block size and a modulation and coding scheme (MCS)) and a resource block to be assigned to the UE 100.

The RLC layer transmits data to an RLC layer of a reception side by using the functions of the MAC layer and the PHY layer. Between the RLC layer of the UE 100 and the RLC layer of the eNB 200, user data and control signal are transmitted via a logical channel.

The PDCP layer performs header compression and decompression, and encryption and decryption.

The RRC layer is defined only in a control plane dealing with control signal. Between the RRC layer of the UE 100 and the RRC layer of the eNB 200, control message (RRC messages) for various types of configuration are transmitted. The RRC layer controls the logical channel, the transport channel, and the physical channel in response to establishment, re-establishment, and release of a radio bearer. When there is an RRC connection between the RRC of the UE 100 and the RRC of the eNB 200, the UE 100 is in a connected state (an RRC connected state), otherwise the UE 100 is in an idle state (an RRC idle state).

A NAS (Non-Access Stratum) layer positioned above the RRC layer performs a session management, a mobility management and the like.

Fig. 5 is a configuration diagram of a radio frame used in the LTE system. In the LTE system, OFDMA (Orthogonal Frequency Division Multiple Access) is applied to a downlink, and SC-FDMA (Single Carrier Frequency Division Multiple Access) is applied to an uplink, respectively.

As illustrated in Fig. 5, the radio frame is configured by 10 subframes arranged in a time direction, wherein each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. The resource block includes a plurality of subcarriers in the frequency direction. Resource element is configured by one subcarrier and one symbol.

Among radio resources assigned to the UE 100, a frequency resource is configured by a resource block and a time resource is configured by a subframe (or slot).

In the downlink, an interval of several symbols at the head of each subframe is a control region used as a physical downlink control channel (PDCCH) for mainly transmitting a control signal. Furthermore, the other interval of each subframe is a region available as a physical downlink shared channel (PDSCH) for mainly transmitting user data.

In the uplink, both ends in the frequency direction of each subframe are control regions used as a physical uplink control channel (PUCCH) for mainly transmitting a control signal. Furthermore, the central portion in the frequency direction of each subframe is a region available as a physical uplink shared channel (PUSCH) for mainly transmitting user data.

### (Overview of cell identifier)

In the LTE system, a cell identifier for identifying a cell is assigned to each cell. The cell identifier includes a physical cell identifier (PCI), a cell global identifier (ECGI), and the like. The ECGI is configured by an MCC, an MNC, and an ECI. The ECI is configured by a combination of the PCI and an eNB identifier.

The PCI is configured by 8 bits, and mainly used in the physical layer. The number of PCIs defined in the specifications is 504. Further, 504 signal sequences of a cell-specific reference signal (CRS) are prepared, and the signal sequences are associated with PCIs. The PCIs are divided into 168 cell ID groups and three cell IDs are included in each cell ID group (168 x 3 = 504).

In a cell search, the UE 100 specifies the PCI of a cell by a primary synchronization signal (PSS) and a secondary synchronization signal (SSS) which are received from the cell. Specifically, a value of the PSS is associated with (three) cell IDs in a cell ID group, a value of the SSS is associated with (168) cell ID groups, and the PCI is specified by a combination of the PSS and the SSS. Further, the PSS and the SSS provide a downlink frame level synchronization.

The UE 100 receives the CRS on the basis of the PCI after specifying the PCI of the cell by the combination of the PSS and the SSS. The CRS provides downlink symbol synchronization and frequency synchronization. The CRS is provided in a first OFDM symbol and a third-to-last OFDM symbol in a slot at six subcarrier intervals. Further, CRSs are divided into six frequency shift groups (hereinafter, referred to as "CRS frequency shift group") depending on the PCI.

It is noted that the ECGI is broadcast from the cell by a system information block (SIB) that is exchanged in the RRC layer.

### (NCT according to first embodiment)

In the 3GPP, introduction of a new carrier structure (NCT) has been discussed, that is different from a conventional-type carrier structure defined in the Releases 8 to 11.

In carrier aggregation (CA) in which a plurality of component carriers (CCs) are bundled to be used for communication, there exist a case where the NCT is applied to a primary component carrier (PCC) and a case where the NCT is applied to a secondary component carrier (SCC). The SCC is a CC that is not used alone, used as a pair with the PCC and used exclusively for transmitting user data. It is noted that the PCC is also referred to as "primary cell", and the SCC is also referred to as "secondary cell".

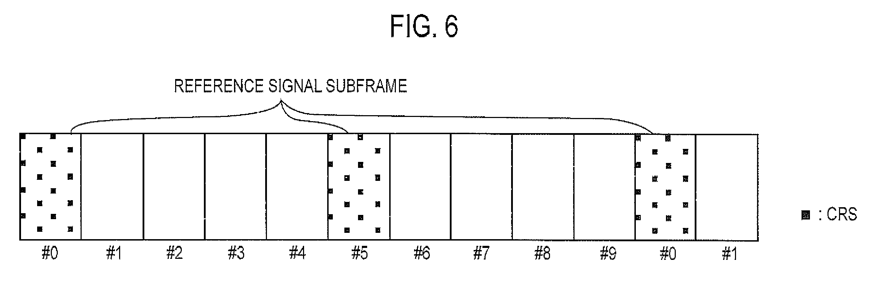

In the first embodiment, a case where the SCC to which the NCT is applied is used in downlink, is mainly assumed. Fig. 6 is a diagram for explaining the NCT according to the first embodiment.

As shown in Fig. 6, in the SCC to which the NCT is applied, a subframe in which a CRS is arranged, out of the plurality of downlink subframes (hereinafter, referred to as "reference signal subframe") is intermittently provided in order to increase an area to which user data is assignable. In an example of Fig. 6, a CRS is arranged in only one subframe out of five subframes. Specifically, a CRS is arranged only in a subframe #0 out of subframes #0 to #4, and a CRS is arranged only in a subframe #5 out of subframes #5 to #9.

In this case, a CRS is not used for channel estimation for data demodulation, but used for correcting synchronization deviation with the PCC. More particularly, a CRS is used for the frequency synchronization and frame timing synchronization of the carrier (SCC). It is noted that a demodulation reference signal (DMRS) attached to user data is used for channel estimation for data demodulation.

### (Operation according to first embodiment)

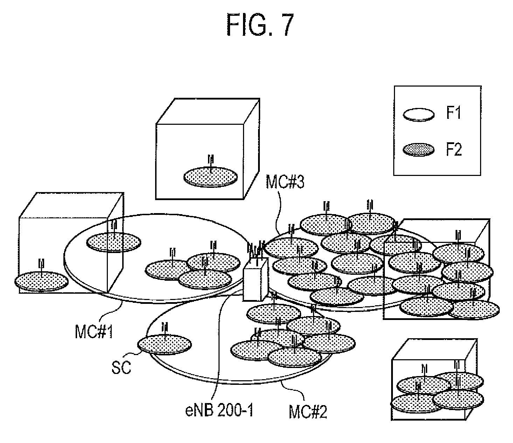

Fig. 7 is a diagram for explaining an operation environment according to the first embodiment.

As shown in Fig. 7, in the first embodiment, an environment in which a number of small cells SC are provided in a macro cell MC (so-called HetNet environment) is assumed. A small cell SC is a pico cell or a femto cell, for example.

In an example of Fig. 7, an eNB 200-1 manages three macro cells, an MC #1 to an MC #3, and a number of small cells SC are provided in each macro cell MC. Each of the small cells SC is managed by one eNB 200. However, a plurality of small cells SC may be managed by one eNB 200. A cell identifier such as the PCI is assigned to each cell.

Further, a frequency F1 to which the macro cell MC belongs is different from a frequency F2 to which the small cell SC belongs. In the first embodiment, the CA in which the macro cell MC is regarded as a PCC (primary cell) and the small cell SC is regarded as an SCC (secondary cell), is applied, and a case where the NCT described above is applied to the small cell SC, is mainly assumed.

In this way, in an environment in which a number of small cells are provided in the macro cell, a PCI depletes and flexibility of assignment of a PCI is impaired. For example, there is a problem that, when PCIs belonging to the same CRS frequency shift group are assigned to a plurality of cells which are adjacent to each other, the CRSs interfere with each other, and the CRSs are not capable of being transmitted normally because the plurality of cells transmit the CRSs in the same resource element (hereinafter, referred to as "first problem").

Further, there is a problem that, when the same PCI is assigned to a plurality of small cells SC in the same macro cell MC, the PCI is not capable of uniquely identifying the small cells SC in the macro cell MC (hereinafter, referred to as "second problem").

In the first embodiment, the eNB 200 that manages the small cell SC to which the above-described NCT is applied, transmits the CRS in reference signal subframes which are some downlink subframes out of the plurality of downlink subframes. Here, a cell identifier including the subframe number-related part that is related with the subframe number of the reference signal subframe, is assigned to the small cell SC. Hereinafter, such a new cell identifier is referred to as an extended physical cell identifier (E-PCI).

In this way, it is possible to differentiate the reference signal subframes depending on the subframe number-related part by relating the E-PCI with the reference signal subframe. Therefore, even when the PCIs belonging to the same CRS frequency shift group are assigned to the plurality of cells which are adjacent to each other, in a case where the reference signal subframes of the plurality of cells are different from each other, collision of the CRS is avoided, and thus it is possible to solve the above-described first problem.

Further, in the first embodiment, an E-PCI is obtained by extending a PCI of a cell. The subframe number-related part is an extended part to be added to the PCI. Therefore, even when the same PCI is assigned to the plurality of small cells SC in the same macro cell MC, the E-PCI is capable of uniquely identifying the small cells SC, and thus it is possible to solve the above-described second problem.

In the first embodiment, the eNB 200 that manages the small cell SC sets the reference signal subframe, out of the plurality of downlink subframes depending on the subframe number-related part included in the E-PCI that is assigned to the small cell SC. Accordingly, it is possible to automatically set an appropriate reference signal subframe by assigning an appropriate E-PCI to the small cell SC, for example.

The UE 100 receives the CRS from the small cell SC in the reference signal subframe. When grasping the E-PCI of the small cell SC, the UE 100 specifies the reference signal subframe of the small cell SC on the basis of the subframe number-related part that is included in the E-PCI. For example, the macro cell MC functioning as the primary cell notifies the UE 100 of the E-PCI of the small cell SC that is the secondary cell, thereby enabling the UE 100 to grasp the E-PCI of the small cell SC.

Alternatively, even when the UE 100 does not grasp the E-PCI of the small cell SC, once the UE 100 receives the CRS from the small cell SC, the UE 100 is capable of grasping the E-PCI of the small cell SC by specifying the PCI from the signal sequence of the CRS and specifying the subframe number-related part from the subframe number of the reference signal subframe corresponding to the CRS.

Further, in the first embodiment, it is possible to use the subframe number-related part as a group identifier for identifying a group including a plurality of cells (hereinafter, referred to as "cell group"). The cell group is capable of being set depending on an attribute of the cell (a cell type, a PCI, etc.). For example, a cell group including femto cells may be defined and a cell group for each numerical range of a PCI may be defined.

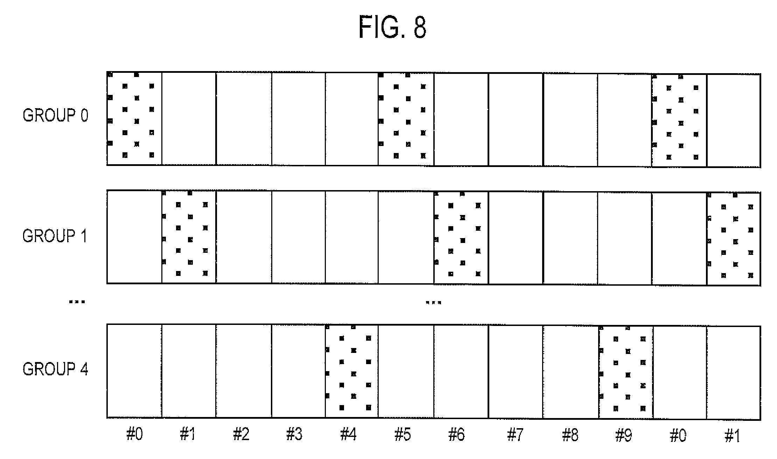

Fig. 8 is a diagram for explaining a relation between a cell group and a reference signal subframe. As shown in Fig. 8, when the reference signal subframe is set in a five-subframes cycle, five cell groups in total of cell groups 0 to 4 are set. A small cell SC belonging to a cell group n sets a subframe #n and a subframe #(n + 5) as reference signal subframes.

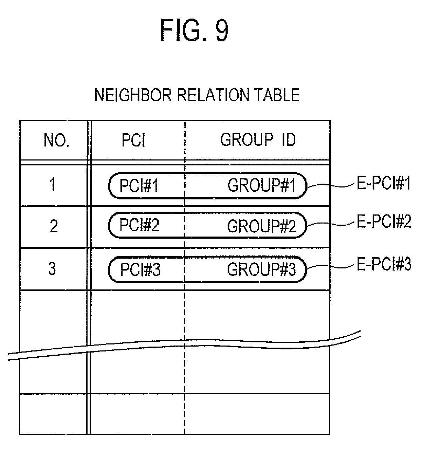

Furthermore, it is possible to use the E-PCI in a measurement report procedure for handover by including the E-PCI in a neighbor relation table (NRT). Fig. 9 is a diagram for explaining the NRT according to the embodiment. For example, the eNB 200-1 managing a macro cell MC manages the NRT corresponding to the macro cell MC.

As shown in Fig. 9, the eNB 200-1 manages the NRT including a neighboring E-PCI that is the E-PCI assigned to a neighboring small cell SC. The NRT includes the E-PCI of each of the plurality of neighboring cells (neighboring E-PCI). The neighboring E-PCI includes the PCI of the neighboring cell and the subframe number-related part (group ID) corresponding to the neighboring cell.

### (Summary of first embodiment)

As described above, the eNB 200 managing a small cell SC to which the NCT is applied, transmits a CRS in the reference signal subframes which are some downlink subframes, out of the plurality of downlink subframes. In the first embodiment, the E-PCI including the subframe number-related part that is related with the subframe number of the reference signal subframe, is assigned to the small cell SC.

In this way, it is possible to differentiate the reference signal subframes depending on the subframe number-related part by relating the E-PCI with the reference signal subframe. Therefore, even when the PCIs belonging to the same CRS frequency shift group are assigned to the plurality of cells which are adjacent to each other, in a case where the reference signal subframes of the plurality of cells are different from each other, the collision of CRSs is avoided, and thus it is possible to solve the problem of interfering with each other by the CRSs.

Further, in the first embodiment, an E-PCI is obtained by extending a PCI of a cell. The subframe number-related part is an extended part to be added to the PCI. Therefore, even when the same PCI is assigned to a plurality of small cells SC in the same macro cell MC, an E-PCI is capable of uniquely identifying small cells SC.

### [Second Embodiment]

A second embodiment will be described while focusing on the differences from the first embodiment. A system configuration and an operation environment according to the second embodiment are similar to those in the first embodiment.

In the above-described first embodiment, a case where an E-PCI (PCI) is assigned to each cell by an operator, is assumed. On the other hand, in the second embodiment, an E-PCI (PCI) is autonomously assigned to each cell by coordination between eNBs 200.

### (Operation according to second embodiment)

### (1) Operation overview

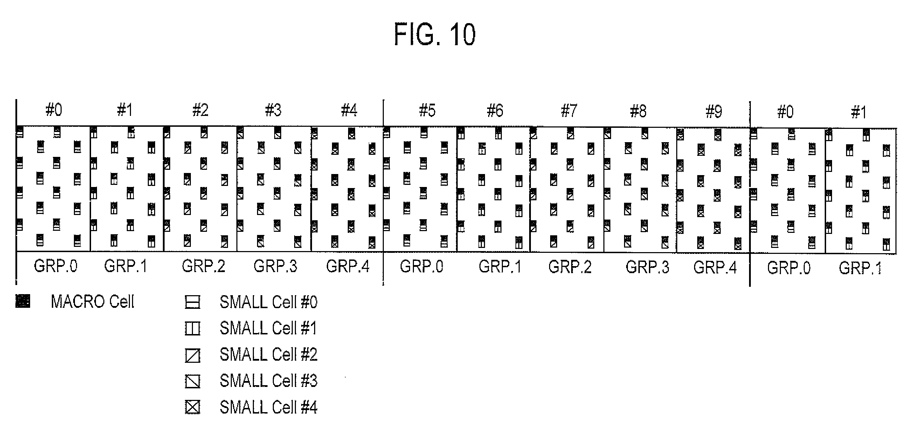

In the second embodiment, the eNB 200 performs a negotiation with a neighboring cell before starting an operation of the cell of the eNB 200. The eNB 200 sets a resource element (CRS resource element) in which a CRS of the cell of the eNB 200 is provided on the basis of a result of the negotiation. Accordingly, it is possible to autonomously set an E-PCI (PCI) so that CRS resource elements do not overlap between neighboring cells. Specifically, as shown in Fig. 10, a CRS resource element of a small cell SC is set, avoiding a CRS resource element of a neighboring macro cell MC. This prevents strong interference by a CRS from a macro cell MC and expands a coverage area of a small cell SC.

### (2) Operation pattern 1

In an operation pattern 1, an EPCI (PCI) is set, starting from the eNB 200-1 that manages a macro cell MC.

First, when a small cell SC is installed in a coverage of the macro cell MC, the eNB 200-1 managing the macro cell MC confirms a CRS resource element of each of the macro cell MC of the eNB 200-1 and a neighboring macro cell MC, and notifies the small cell SC of CRS resource element-related information on a confirmation result on the X2 interface, for example. It is noted that the eNB 200-1 may confirm the CRS resource element of the neighboring macro cell MC on the basis of the NRT that is managed by the eNB 200-1 itself because the E-PCI (PCI) is related with the resource element.

The CRS resource element-related information is information indicating the CRS resource element of each of the macro cell MC of the eNB 200-1 and the neighboring macro cell MC. Alternatively, the CRS resource element-related information may be information indicating a CRS resource element capable of being used by the small cells SC. Alternatively, the E-PCI (PCI) may be regarded as the CRS resource element-related information instead of regarding information indicating the CRS resource element as the CRS resource element-related information.

Next, when receiving the CRS resource element-related information, the eNB 200 managing the small cell SC selects the CRS resource element of the small cell SC on the basis of the CRS resource element-related information so as to avoid the CRS resource element of the macro cell MC, and specifies the E-PCI (PCI) corresponding to the selected CRS resource element. Then, the specified E-PCI (PCI) is set to the small cell. It is noted that the eNB 200 that manages the small cell SC may notify the eNB 200-1 that manages the macro cell MC of the E-PCI (PCI) assigned to the small cell SC or the CRS resource element. It is noted that the E-PCI (PCI) may be notified to an OAM (Operation And Maintenance) device included in the EPC 20.

### (3) Operation pattern 2

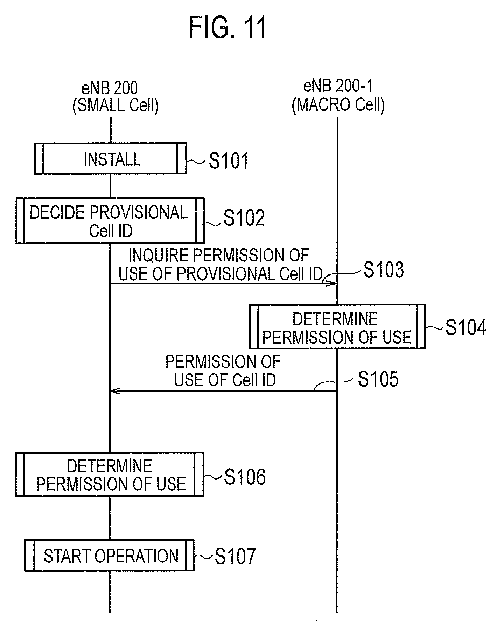

In a method in an operation pattern 2, an E-PCI (PCI) is set, starting from the eNB 200 that manages a small cell SC. Fig. 11 is a sequence diagram showing the operation pattern 2.

As shown in Fig. 11, when a small cell SC is installed in step S101, the eNB 200 managing the small cell SC provisionally decides a CRS resource element of the small cell SC in step S102. When the PCI of the small cell SC is preset or notified on the X2/S1 interface, the PCI is followed. Alternatively, when the small cell SC has a function of self-monitoring, the function is used.

In step S103, the eNB 200 inquires of the eNB 200-1 that manages a macro cell MC whether or not the CRS resource element is usable, that is provisionally decided by the eNB 200 itself on the X2 interface, for example. It is noted that whether or not the CRS resource element is usable may be inquired to the OAM device included in the EPC 20.

In step S104, the eNB 200-1 determines whether or not a notified provisional CRS resource element may be used. A determination method is to make a determination by confirming the CRS resource element of each of the macro cell MC of the eNB 200-1 and the neighboring macro cell MC similarly to the operation pattern 1.

In step S105, the eNB 200-1 notifies the eNB 200 of a determination result (OK/NG).

In step S106, when the determination result is "OK", the eNB 200 sets the provisional CRS resource element to an actual CRS resource element and specifies the E-PCI (PCI) corresponding to the actual CRS resource element.

In step S107, the eNB 200 sets the specified E-PCI (PCI) to the small cell SC and starts an operation of the small cell SC.

### (Summary of second embodiment)

In the second embodiment, a CRS resource element of a small cell SC is set, avoiding a CRS resource element of a neighboring macro cell MC. This prevents strong interference by a CRS from a macro cell MC and expands a coverage area of a small cell SC.

### [Other Embodiments]

In the above-described first embodiment, the E-PCI is obtained by extending the PCI. However, the E-PCI may not necessarily be obtained by extending the PCI of a cell. For example, the E-PCI may be a configuration in which some bits included in an existing PCI is replaced by the subframe number-related part and maintain a bit length (8 bits) of the existing PCI.

In the above-described second embodiment, an adjustment has been made in a frequency direction so that the CRS resource elements do not overlap, however, the embodiment is not limited to the case of adjusting in the frequency direction, but the adjustment may be made in a time direction so that reference signal subframes do not overlap.

Further, in each of the above-described embodiments, a description has been given of an example of applying the present invention to the HetNet that is a network including cells having different cell types, however, the present invention may be applied to a network including the same type of cells.

In each of the above-described embodiments, although the LTE system is described as an example of the mobile communication system, the embodiment is not limited to the LTE system, and the present invention may be applied to a system other than the LTE system.

It is noted that the entire content of Japanese Patent Application No. 2013-199878 (filed on September 26, 2013) is incorporated in the present specification by reference.

### INDUSTRIAL APPLICABILITY

According to a base station and a user terminal in the present invention, it is possible to realize an improved cell identifier.

## Claims

1. A base station that manages a cell in a mobile communication system of performing communication by using a frame configuration having a plurality of downlink subframes, comprising:
a transmitter configured to transmit a cell-specific reference signal in reference signal subframes which are some downlink subframes out of the plurality of downlink subframes, wherein
a cell identifier including a subframe number-related part related with a subframe number of the reference signal subframes is assigned to the cell.

2. The base station according to claim 1, wherein the cell identifier is obtained by extending a physical cell identifier of the cell, and
the subframe number-related part is an extended part to be added to the physical cell identifier.

3. The base station according to claim 1, wherein the subframe number-related part is a group identifier for identifying a group comprising a plurality of cells including the cell.

4. The base station according to claim 1, further comprising a controller configured to set the reference signal subframe, out of the plurality of downlink subframes depending on the subframe number-related part included in the cell identifier assigned to the cell.

5. The base station according to claim 4, wherein the controller performs a negotiation with a neighboring cell before starting an operation of the cell, and
the controller sets at least one of a resource element and a subframe in which a cell-specific reference signal of the cell is provided on the basis of a result of the negotiation.

6. The base station according to claim 1, wherein the cell is a small cell capable of being arranged in a coverage of a macro cell.

7. The base station according to claim 1, wherein the cell is a secondary cell that is operated in a pair with a primary cell.

8. A user terminal used in a mobile communication system of performing communication by using a frame configuration having a plurality of downlink subframes, comprising:
a receiver configured to receive, from a cell, a cell-specific reference signal in reference signal subframes which are some downlink subframes, out of the plurality of downlink subframes, wherein
a cell identifier including a subframe number-related part related with a subframe number of the reference signal subframes is assigned to the cell.

9. The user terminal according to claim 8, further comprising a controller configured to specify the reference signal subframe on the basis of the subframe number-related part included in the cell identifier.

10. The user terminal according to claim 8, wherein the cell identifier is obtained by extending a physical cell identifier of the cell, and
the subframe number-related part is an extended part to be added to the physical cell identifier.

11. The user terminal according to claim 8, wherein the subframe number-related part is a group identifier for identifying a group comprising a plurality of cells including the cell.
